# FASCICULE DE BREVET EUROPEEN

(11) **EP 2 191 531 B1**
(45) Date de publication et mention de la délivrance du brevet: **14.09.2011**
(21) Numéro de dépôt: 08837769.2
(22) Date de dépôt: 18.09.2008
(51) Int. Cl.: H01M 8/10

(54) **SUPPORT DE CELLULES DE PILE A COMBUSTIBLE**
ZELLENHALTER FÜR BRENNSTOFFZELLEN
CELL HOLDER FOR FUEL CELL

(30) Priorité: 20.09.2007 FR 0757703
(43) Date de publication de la demande: 02.06.2010
(73) Titulaire: STMicroelectronics SA, 92120 Montrouge (FR); Université François Rabelais, 37041 Tours (FR)
(72) Inventeur: DESPLOBAIN, Sébastien, 38420 Le Versoud (FR); GAUTIER, Gaël, F-37200 Veretz (FR)
(74) Mandataire: de Beaumont, Michel
(86) Numéro de dépôt international: PCT/FR2008/051675
(87) Numéro de publication internationale: WO 2009/047453

(56) Documents cités:
- EP-A- 1 947 721
- WO-A-01/37357
- FR-A- 2 891 280
- JP-A- 2005 351 754
- US-A1- 2004 134 879
- US-A1- 2006 234 391
- US-A1- 2007 108 465
- KOLASINSKI ET AL: "Silicon nanostructures from electroless electrochemical etching" CURRENT OPINION IN SOLID STATE AND MATERIALS SCIENCE, ELSEVIER SCIENCE LTD, OXFORD, GB, vol. 9, no. 1-2, 1 février 2005 (2005-02-01), pages 73-83, XP005482038 ISSN: 1359-0286
- KAMARUDIN ET AL: "Overview on the challenges and developments of micro-direct methanol fuel cells (DMFC)" JOURNAL OF POWER SOURCES, ELSEVIER, AMSTERDAM, NL, vol. 163, no. 2, 22 décembre 2006 (2006-12-22), pages 743-754, XP005812531 ISSN: 0378-7753

## Description

### Domaine de l'invention

La présente invention concerne un support de cellules de pile à combustible et un procédé de fabrication d'un tel support.

### Exposé de l'art antérieur

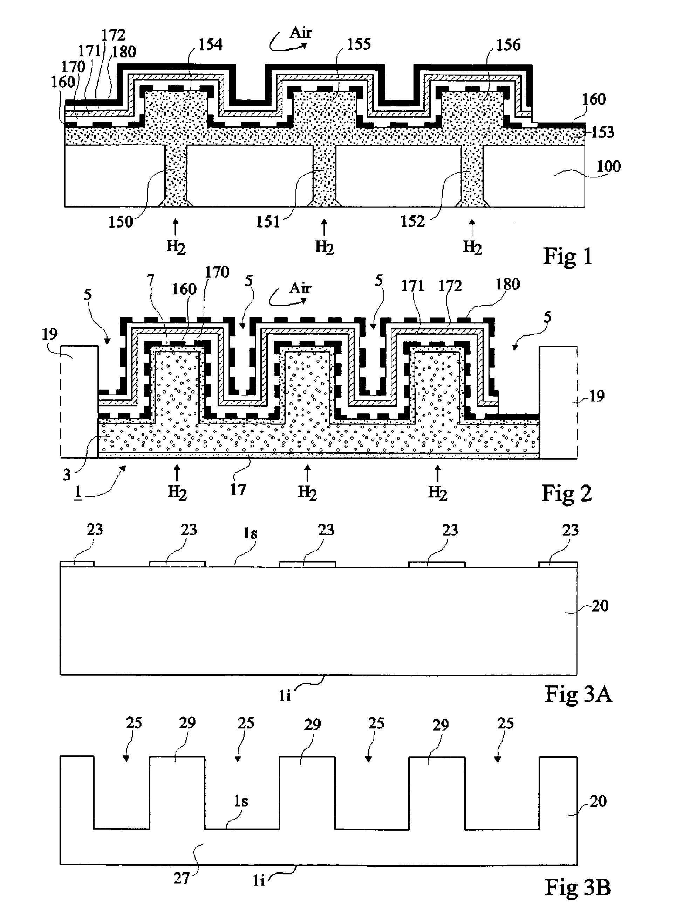

Des piles à combustible utilisant des techniques de microélectronique ont été proposées. Notamment, la demande de brevet US N° 2007/00072032 A1 publiée le 29 mars 2007 propose des cellules de pile à combustible formées sur une plaquette de silicium comprenant des piliers de silicium poreux. La figure 1 reproduit la figure 4H de cette demande antérieure.

Comme l'illustre la figure 1, sur la face supérieure d'une plaquette de silicium 100 s'étend une couche de silicium poreux 153 comprenant des reliefs 154, 155 et 156. Cette couche de silicium poreux 153 forme le support d'une cellule de pile à combustible. Sur la face supérieure de ce support, en épousant les reliefs de celui-ci, s'étendent successivement une première couche conductrice 160, une première couche de catalyseur 170, une couche d'électrolyte 171, une seconde couche de catalyseur 172, et une seconde couche conductrice 180. La première couche conductrice 160 constitue le collecteur d'anode de la cellule de pile à combustible et la seconde couche conductrice 180 en constitue le collecteur de cathode. Les couches de collecteur d'anode 160 et de cathode 180 comportent des ouvertures traversantes sur toutes leurs surfaces. Un contact (non représenté) est pris sur la face inférieure de la cellule de pile à combustible sur la couche de collecteur d'anode 160 et un contact (non représenté) est pris sur la couche de collecteur de cathode 180. L'ensemble de la première couche de catalyseur 170, de l'électrolyte 171, et de la seconde couche de catalyseur 172 forme "l'empilement actif" de la cellule de pile à combustible. Dans la plaquette de silicium 100, alignés avec les reliefs 154, 155 et 156 de la couche de silicium poreux 153, sont formés des piliers de silicium poreux 150, 151 et 152 qui permettent d'acheminer l'hydrogène arrivant sur la face inférieure de la plaquette de silicium 100 vers la surface supérieure de celle-ci.

Pour faire fonctionner la cellule de pile à combustible, on injecte de l'hydrogène du côté de la face inférieure du support, et de l'air (porteur d'oxygène) du côté de la face supérieure du support. L'hydrogène est "décomposé" au niveau de la couche de catalyseur 170 pour former, d'une part, des protons H⁺ qui se dirigent vers la couche d'électrolyte 171 et d'autre part des électrons qui se dirigent vers le collecteur d'anode 160. Les protons H⁺ traversent la couche d'électrolyte 171 jusqu'à rejoindre la couche de catalyseur 172 où ils se recombinent avec l'oxygène, arrivant de l'extérieur de la pile à travers les ouvertures formées dans la couche conductrice de cathode 180, et avec des électrons. De façon classique, avec une telle structure, on obtient un potentiel positif sur le collecteur de cathode 180 (côté oxygène) et un potentiel négatif sur le collecteur d'anode 160 (côté hydrogène).

On soulignera que la figure 1 n'est pas à l'échelle. En particulier, la plaquette de silicium 100 a typiquement une épaisseur comprise entre 250 et 700 µm tandis que l'empilement actif des couches 171, 172 et 173 a typiquement une épaisseur de l'ordre de 30 à 50 µm.

### Résumé de l'invention

Un mode de réalisation de la présente invention vise un nouveau support de pile à combustible en silicium poreux, ce support permettant d'améliorer, entre autres, le rendement électrochimique par unité de surface de la pile.

Ainsi, un mode de réalisation de la présente invention prévoit une plaquette de silicium poreux comportant, du côté de sa face supérieure, de multiples évidements, cette face supérieure étant revêtue d'une couche de silicium poreux comportant des pores plus petits que ceux du corps de la plaquette.

Selon un mode de réalisation de la présente invention, la face inférieure de la plaquette est également revêtue d'une couche de silicium poreux comportant des pores plus petits que ceux du corps de la plaquette.

Selon un mode de réalisation de la présente invention, les pores du corps de la plaquette ont des dimensions supérieures à 50 nm et les pores des couches de silicium poreux ont des dimensions comprises entre 2 et 50 nm.

Selon un mode de réalisation de la présente invention, les couches de silicium poreux ont une épaisseur comprise entre 1 et 20 µm.

Un mode de réalisation de la présente invention prévoit une pile à combustible formée sur la face supérieure d'une plaquette de silicium poreux telle que décrite ci-dessus.

Selon un mode de réalisation de la présente invention, la pile à combustible comprend, sur la couche de silicium poreux supérieure, une superposition d'une première couche conductrice destinée à être reliée à un collecteur d'anode et présentant des ouvertures traversantes, d'une première couche de catalyseur, d'une couche d'électrolyte, d'une seconde couche de catalyseur et d'une seconde couche conductrice destinée à être reliée à un collecteur de cathode et présentant des ouvertures traversantes.

Un mode de réalisation de la présente invention prévoit un procédé de formation d'une plaquette support en silicium poreux, comprenant les étapes suivante :
former de multiples évidements du côté de la face supérieure d'une plaquette de silicium faiblement dopée de type N ;
former, sur le relief de la face supérieure de la plaquette de silicium, une couche plus fortement dopée de type N que la plaquette de silicium ; et
effectuer une électrolyse de la plaquette de silicium d'où il résulte que le corps de la plaquette est transformé en silicium poreux et que la couche fortement dopée est transformée en silicium poreux, les pores de la couche de silicium poreux étant plus petits que les pores du corps de la plaquette de silicium poreux.

Selon un mode de réalisation de la présente invention, avant électrolyse, une couche de silicium plus fortement dopée de type N que la plaquette de silicium est également formée du côté de la face inférieure de la plaquette de silicium.

Selon un mode de réalisation de la présente invention, les pores du corps de la plaquette de silicium poreux ont des dimensions supérieures à 50 nm et les pores des couches de silicium poreux ont des dimensions comprises entre 2 et 50 nm.

Un mode de réalisation de la présente invention prévoit un procédé de formation d'une pile à combustible sur une plaquette de silicium poreux telle que celle décrite ci-dessus, comprenant en outre les étapes suivantes :
effectuer le dépôt d'une première couche conductrice destinée à être reliée à un collecteur d'anode sur les évidements ;
former des ouvertures traversantes dans la première couche conductrice ;
effectuer successivement, sur la première couche conductrice, des dépôts d'une première couche de catalyseur, d'une couche d'électrolyte, d'une seconde couche de catalyseur et d'une seconde couche conductrice destinée à être reliée à un collecteur d'anode ; et
former des ouvertures traversantes dans la seconde couche conductrice.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, décrite précédemment, illustre une cellule de pile à combustible formée sur un support connu ;
la figure 2 illustre une cellule de pile à combustible formée sur un support de silicium poreux selon un mode de réalisation de la présente invention ; et
les figure 3A, 3B et 3D à 3F illustrent des résultats d'étapes d'un procédé de fabrication d'un support de silicium poreux selon un mode de réalisation de la présente invention, la figure 3C étant une vue de dessus correspondant à la figure 3B.

Par souci de clarté, de mêmes éléments ont été désignés par de mêmes références aux différentes figures et, de plus, comme cela est habituel dans la représentation des structures semiconductrices, les diverses figures ne sont pas tracées à l'échelle.

### Description détaillée

La figure 2 illustre une cellule de pile à combustible formée sur un support selon un mode de réalisation de la présente invention. Le support 1 est formé à partir d'un substrat de silicium macroporeux 3 dont la face supérieure comporte de nombreux évidements ou tranchées 5. Sur la face supérieure en relief du substrat de silicium macroporeux 3 s'étend une couche de silicium mésoporeux 7. On entend ici par silicium "mésoporeux" du silicium poreux dont les pores ont des dimensions comprises entre 2 et 50 nm et par silicium "macroporeux" du silicium poreux dont les pores ont des dimensions supérieures à 50 nm.

Au-dessus de la couche de silicium mésoporeux 7 sont formées des couches constitutives d'une cellule de pile à combustible, de la même façon que cela a été décrit précédemment en relation avec la figure 1. Optionnellement, une couche mince de silicium mésoporeux 17 peut être formée sur la face inférieure du substrat de silicium macroporeux 3.

Des portions épaisses 19 de silicium massif pourront être conservées tout autour du support 1 pour former un cadre solide autour de celui-ci. Ceci a pour effet de solidifier la structure du support, le silicium poreux constituant le support comprenant des régions très minces et pouvant être fragile.

Pour faire fonctionner la cellule de pile à combustible, on met la face inférieure du substrat 3 en contact avec une source d'hydrogène sous pression et la face supérieure de la cellule de pile à combustible en contact avec une source d'oxygène, par exemple l'air ambiant. L'hydrogène traverse le substrat de silicium macroporeux 3 et la couche de silicium mésoporeux 7 pour atteindre la couche de catalyseur 170 par l'intermédiaire des ouvertures formées dans la couche de collecteur d'anode 160. Lorsque la couche mince optionnelle de silicium mésoporeux 17 est formée, l'hydrogène passe tout d'abord par les pores de cette couche avant d'atteindre le substrat de silicium macroporeux 3. L'air, quant à lui, passe dans les ouvertures formées dans la couche de collecteur de cathode 180 pour atteindre la couche de catalyseur 172.

La structure du support illustré en figure 2 présente de nombreux avantages.
- L'association du substrat de silicium macroporeux 3 et de la couche de silicium mésoporeux 7 permet un meilleur approvisionnement en hydrogène de la cellule de pile à combustible. En effet, le substrat de silicium macroporeux comprend des pores de grandes tailles qui permettent d'acheminer rapidement l'hydrogène de la face inférieure du support vers la couche de silicium mésoporeux 7. La chute de pression de l'hydrogène dans ce substrat est relativement faible. L'hydrogène arrive à pression sensiblement égale sur toute la surface inférieure de la couche mince de silicium mésoporeux 7 et est donc régulièrement transmis par celle-ci dans les parties verticales et horizontales de la couche de catalyseur 170. On optimise ainsi la surface d'échange entre l'hydrogène et la couche de catalyseur 170.
- La couche de silicium mésoporeux 7 permet également de maintenir en position la couche de catalyseur 170. En effet, dans certaines configurations antérieures, il est nécessaire de prévoir une couche intermédiaire permettant d'éviter que la couche de catalyseur 170 ne pénètre dans la face supérieure du support, notamment dans des pores de grandes dimensions d'une couche de silicium poreux. Les pores de la couche de silicium mésoporeux 7 étant très fins, la couche de catalyseur 170 ne peut y pénétrer et il n'est donc pas nécessaire de prévoir de couche tampon.
- La couche optionnelle inférieure de silicium mésoporeux 17 permet une régulation du débit d'hydrogène arrivant dans le substrat de silicium macroporeux 3. En effet, les réservoirs d'hydrogène étant généralement sous pression, il peut être nécessaire d'en réguler le débit et notamment d'éviter les à-coups à la mise sous pression. La couche de silicium mésoporeux 17 remplit cette fonction.

Les figures 3A à 3F illustrent des résultats d'étapes d'un procédé de fabrication d'un support d'une cellule de pile à combustible en silicium poreux selon un mode de réalisation de la présente invention. On notera que ce support est généralement réalisé sur une partie seulement d'une plaquette de silicium.

En figure 3A, on part d'une plaquette de silicium 20 faiblement dopée de type N. Sur la face supérieure 1s de cette plaquette 20 est formé un masque 23 comportant des ouvertures adaptées. A titre d'exemple, les ouvertures dans le masque 23 peuvent avoir des dimensions d'environ 50 µm.

A l'étape illustrée en figure 3B, on a réalisé de multiples évidements ou tranchées 25 dans la plaquette de silicium 20 au travers des ouvertures du masque 23. La plaquette de silicium 20 comprend ainsi une zone amincie 27 surmontée de protubérances 29. A titre d'exemple, les évidements peuvent être formés par gravure sous plasma et, également à titre d'exemple, si la plaquette de silicium 20 a initialement une épaisseur de 300 µm, la zone amincie 27 peut avoir une épaisseur comprise entre environ 100 et 200 µm. On enlève ensuite le masque 23.

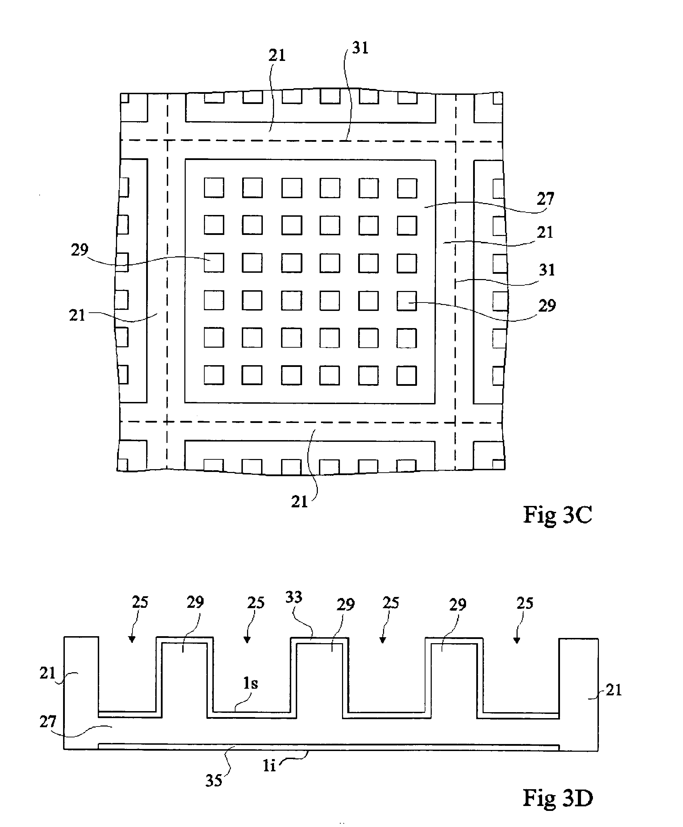

La figure 3C illustre un exemple de vue de dessus de la structure de la figure 3B. Dans cette vue, la partie de la plaquette de silicium dans laquelle est formée un support de pile à combustible est délimitée par un cadre de silicium 21 en forme de rectangle destiné à être découpé selon une ligne en pointillés 31. Les protubérances 29 sont en forme de petits carrés et sont régulièrement espacées au niveau de la zone amincie de silicium 27. A titre de variante, les évidements 25 formés dans la plaquette de silicium à l'étape de la figure 3B peuvent définir des formes différentes de protubérances 29 au-dessus de la couche amincie de silicium 27. A titre d'exemple, en vue de dessus, les protubérances 29 peuvent avoir la forme de nervures.

A l'étape de la figure 3D, on a réalisé, en protégeant le cadre de silicium 21 autour de la couche amincie 27, un dopage de type N sur la face supérieure 1s de la zone amincie 27 et sur le dessus et les côtés des protubérances 29 pour obtenir une couche mince fortement dopée 33. Un dopage de type N est optionnellement formé sur la face inférieure 1i de la zone amincie 27 pour obtenir une couche mince fortement dopée 35. Ces dopages peuvent être obtenus par des implantations de phosphore suivies de recuits d'activation. Egalement à titre d'exemple, les couches de silicium fortement dopées 33 et 35 peuvent avoir des épaisseurs comprises entre environ 1 et 20 µm.

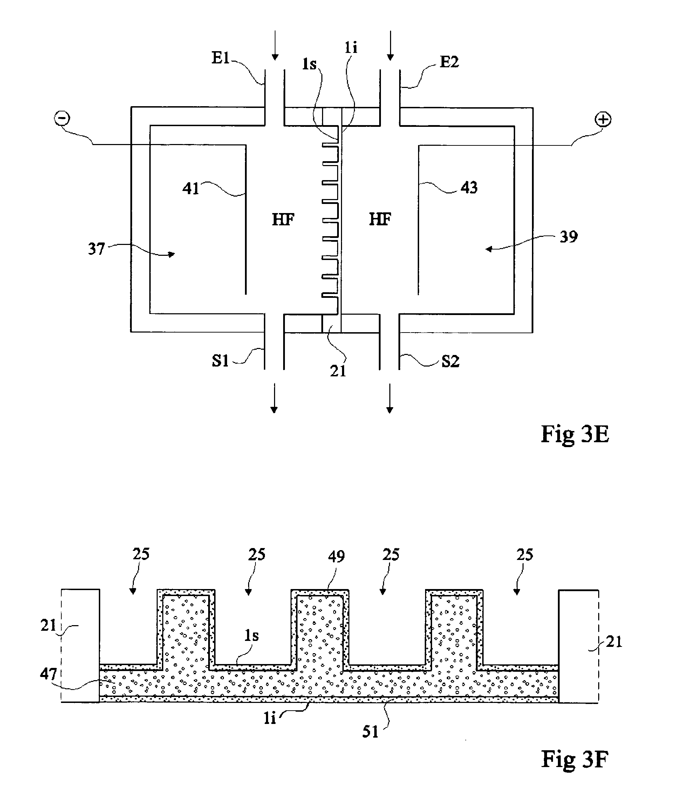

A l'étape suivante, on effectue une électrolyse de la structure précédemment obtenue, le cadre 21 étant protégées des deux côtés par des masques appropriés. La figure 3E représente un exemple d'appareil d'électrolyse adapté qui comprend deux bains d'acide fluorhydrique 37 et 39 dans lesquels sont plongées des électrodes en platine 41 et 43, respectivement reliées à des bornes négatives et positives d'une tension d'alimentation. L'acide fluorhydrique des bains 37 et 39 est renouvelé régulièrement par des entrées E1 et E2 et des sorties S1 et S2 des bains 37 et 39.

Dans cet exemple, la face supérieure 1s de la plaquette est en contact avec le bain 37 relié à la borne négative et l'autre face 1i de la plaquette est en contact avec le bain 39 relié à la borne positive.

A titre indicatif, et non limitatif, pour une plaquette ayant une épaisseur de 300 µm, on peut utiliser des bains présentant une concentration d'acide fluorhydrique de 30 % et une densité de courant d'électrolyse de 60 mA/cm². Les siliciums mésoporeux et macroporeux peuvent être formés avec des densités de courant différentes pour améliorer l'interface entre les différentes couches.

Comme cela est illustré en figure 3F, il résulte automatiquement de l'étape d'électrolyse que le corps faiblement dopé 27, 29 (figure 3D) de la tranche de silicium est transformé en silicium macroporeux 47 et que les couches superficielles 33 et 35 fortement dopées de type N sont transformées en couches de silicium mésoporeux 49 et 51.

Un avantage d'avoir prévu un corps faiblement dopé de type N et une couche externe fortement dopée de type N est que, après électrolyse, on obtient une forte adhérence entre le corps de silicium macroporeux et la couche externe de silicium mésoporeux.

On obtient ainsi le support de cellule de pile à combustible tel que représenté en figure 2. Ensuite, pour former la cellule de pile à combustible de la figure 2, on réalise les étapes suivante :
- formation d'une première couche conductrice de collecteur d'anode, par exemple en or, s'étendant sur le relief de la couche de silicium poreux 49 ;
- formation d'ouvertures traversantes dans la première couche conductrice de collecteur d'anode ;
- formation, successivement, d'une première couche de catalyseur, d'une couche d'électrolyte et d'une seconde couche de catalyseur sur le relief de la première couche conductrice ;
- formation d'une seconde couche conductrice de collecteur de cathode sur la seconde couche de catalyseur ;
- formation d'ouvertures traversantes dans la seconde couche conductrice de collecteur de cathode ; et
- gravures successives d'une petite portion de la seconde couche conductrice de collecteur de cathode, de la seconde couche de catalyseur, de la couche d'électrolyte et de la première couche de catalyseur pour former un accès à la première couche conductrice de collecteur d'anode.

Des modes de réalisation particuliers de la présente invention ont été décrits. Diverses variantes et modifications apparaîtront à l'homme de l'art. En particulier, il est possible de réaliser le support de silicium poreux de la figure 3F sans former la couche de silicium mésoporeux 51 sur la face inférieure du support. En effet, comme cela a été décrit précédemment, cette couche présente un intérêt particulier dans le cas où le débit du réservoir d'hydrogène doit être régulé. Si cela n'est pas le cas, la couche 51 peut ne pas être nécessaire.

De plus, les figures précédemment décrites ne représentent qu'une cellule de pile à combustible. En pratique, sur une même plaquette, on pourra réaliser un grand nombre de cellules qui pourront ensuite être montées en série ou en parallèle, en fonction de l'utilisation souhaitée.

## Revendications

1. Plaquette support de pile à combustible en silicium poreux (3) comportant, du côté de sa face supérieure (1s), de multiples évidements (5), cette face supérieure étant revêtue d'une couche de silicium poreux (7) comportant des pores plus petits que ceux du corps de la plaquette, ladite couche de silicium poreux épousant la forme des évidements.

2. Plaquette en silicium poreux selon la revendication 1, dans laquelle la face inférieure (1i) de la plaquette (3) est également revêtue d'une couche de silicium poreux (17) comportant des pores plus petits que ceux du corps de la plaquette.

3. Plaquette en silicium poreux selon la revendication 1 ou 2, dans laquelle les pores du corps de la plaquette (3) ont des dimensions supérieures à 50 nm et les pores des couches de silicium poreux (7, 17) ont des dimensions comprises entre 2 et 50 nm.

4. Plaquette en silicium poreux selon l'une quelconque des revendications 1 à 3, dans laquelle les couches de silicium poreux (7, 17) ont une épaisseur comprise entre 1 et 20 µm.

5. Pile à combustible formée sur la face supérieure d'une plaquette en silicium poreux selon l'une quelconque des revendications 1 à 4.

6. Pile à combustible selon la revendication 5, comprenant, sur la couche de silicium poreux supérieure (7), une superposition d'une première couche conductrice (160) destinée à être reliée à un collecteur d'anode et présentant des ouvertures traversantes, d'une première couche de catalyseur (170), d'une couche d'électrolyte (171), d'une seconde couche de catalyseur (172) et d'une seconde couche conductrice (180) destinée à être reliée à un collecteur de cathode et présentant des ouvertures traversantes.

7. Procédé de formation d'une plaquette support de pile à combustible en silicium poreux, comprenant les étapes suivantes :
former de multiples évidements (25) du côté de la face supérieure (1s) d'une plaquette de silicium (20) faiblement dopée de type N ;
former, sur le relief de la face supérieure (1s) de la plaquette de silicium, une couche (33) plus fortement dopée de type N que la plaquette de silicium ; et
effectuer une électrolyse de la plaquette de silicium d'où il résulte que le corps de la plaquette (27, 29) est transformé en silicium poreux (47) et que la couche fortement dopée (33) est transformée en silicium poreux (49), les pores de la couche de silicium poreux (49) étant plus petits que les pores du corps de la plaquette de silicium poreux (47).

8. Procédé selon la revendication 7, dans lequel, avant électrolyse, une couche de silicium (35) plus fortement dopée de type N que la plaquette de silicium (20) est également formée du côté de la face inférieure (1i) de la plaquette de silicium.

9. Procédé selon la revendication 7 ou 8, dans lequel les pores du corps de la plaquette de silicium poreux (47) ont des dimensions supérieures à 50 nm et les pores des couches de silicium poreux (49, 51) ont des dimensions comprises entre 2 et 50 nm.

10. Procédé de formation d'une pile à combustible sur une plaquette en silicium poreux (47) réalisée selon le procédé de la revendication 7 ou 8, comprenant en outre les étapes suivantes :
effectuer le dépôt d'une première couche conductrice (160) destinée à être reliée à un collecteur d'anode sur les évidements (25) ;
former des ouvertures traversantes dans la première couche conductrice ;
effectuer successivement, sur la première couche conductrice, des dépôts d'une première couche de catalyseur (170), d'une couche d'électrolyte (171), d'une seconde couche de catalyseur (172) et d'une seconde couche conductrice (180) destinée à être reliée à un collecteur d'anode ; et
former des ouvertures traversantes dans la seconde couche conductrice.

## Claims

1. A porous silicon support wafer (3) for a fuel cell comprising, on its upper surface side (1s), multiple recesses (5), this upper surface being coated with a porous silicon layer (7) comprising pores smaller than those of the wafer bulk, said porous silicon layer following the shape of the recesses.

2. The porous silicon wafer of claim 1, wherein the lower surface (1i) of the wafer (3) is also coated with a porous silicon layer (17) comprising pores smaller than those of the wafer bulk.

3. The porous silicon wafer of claim 1 or 2, wherein the pores of the bulk of the wafer (3) have dimensions greater than 50 nm and the pores of the porous silicon layers (7, 17) have dimensions ranging between 2 and 50 nm.

4. The porous silicon wafer of any of claims 1 to 3, wherein the porous silicon layers (7, 17) have a thickness ranging between 1 and 20 µm.

5. A fuel cell formed on the upper surface of the porous silicon wafer of any of claims 1 to 4.

6. The fuel cell of claim 5, comprising, on the upper porous silicon wafer (7), a superposition of a first conductive layer (160) intended to be connected to an anode collector and having through openings, of a first catalyst layer (170), of an electrolyte layer (171), of a second catalyst layer (172), and of a second conductive layer (180) intended to be connected to a cathode collector and exhibiting through openings.

7. A method for forming a porous silicon support wafer for a fuel cell, comprising the steps of:
forming multiple recesses (25) on the side of the upper surface (1s) of a lightly-doped N-type silicon wafer (20);
forming, on the raised areas of the upper surface (1s) of the silicon wafer, a layer (33) more heavily N-type doped than the silicon wafer; and
performing an electrolysis of the silicon wafer, whereby the wafer bulk (27, 29) is turned into porous silicon (47), and the heavily-doped layer (33) is turned into porous silicon (49), the pores of the porous silicon layer (49) being smaller than the pores of the bulk of the porous silicon wafer (47).

8. The method of claim 7, wherein, before electrolysis, a silicon layer (35) more heavily N-type doped than the silicon wafer (20) is also formed on the side of the lower surface (1i) of the silicon wafer.

9. The method of claim 7 or 8, wherein the pores of the bulk of the porous silicon wafer (47) have dimensions greater than 50 nm and the pores of the porous silicon layers (49, 51) have dimensions ranging between 2 and 50 nm.

10. A method for forming a fuel cell on a porous silicon wafer (47) formed according to the method of claim 7 or 8, further comprising the steps of:
depositing a first conductive layer (160) intended to be connected to an anode collector on the recesses (25);
forming through openings in the first conductive layer;
successively performing, on the first conductive layer, depositions of a first catalyst layer (170), of an electrolyte layer (171), of a second catalyst layer (172), and of a second conductive layer (180) intended to be connected to an anode collector; and
forming through openings in the second conductive layer.

## Patentansprüche

1. Ein poröser Siliziumträgerwafer (3) für eine Brennstoffzelle, der auf seiner oberen Oberflächenseite (1 s) mehrere Ausnehmungen (5) aufweist, wobei diese obere Oberfläche mit einer porösen Siliziumschicht (7) beschichtet ist, die Poren aufweist, die kleiner sind als jene vom Großteil des Wafers bzw. Wafer-Bulk, wobei die poröse Siliziumschicht der Form von den Ausnehmungen folgt.

2. Poröser Siliziumwafer nach Anspruch 1, wobei die unter Oberfläche (1i) von dem Wafer (3) auch mit einer porösen Siliziumschicht (17) beschichtet ist, die Poren aufweist, die kleiner als jene von dem Großteil des Wafers sind.

3. Poröser Siliziumwafer nach Anspruch 1 oder 2, wobei die Poren von dem Großteil von dem Wafer (3) Dimensionen größer als 50 nm besitzen und die Poren von den porösen Siliziumschichten (7, 17) Dimensionen im Bereich zwischen 2 und 50 nm besitzen.

4. Poröser Siliziumwafer nach irgendeinem der Ansprüche 1 bis 3, wobei die porösen Siliziumschichten (7, 17) eine Dicke besitzen, die im Bereich zwischen 1 und 20 µm liegt.

5. Eine Brennstoffzelle, gebildet auf der oberen Oberfläche von dem porösen Siliziumwafer nach irgendeinem der Ansprüche 1 bis 4.

6. Brennstoffzelle nach Anspruch 5, die auf dem oberen porösen Siliziumwafer (7) eine Superposition bzw. Überlagerung aufweist, und zwar von einer ersten leitenden Schicht (160), die dazu gedacht ist mit einem Anodenkollektor verbunden zu sein und durchgehende Öffnungen besitzt, von einer ersten Katalysatorschicht (170), von einer Elektrolytschicht (171), von einer zweiten Katalysatorschicht (172) und von einer zweiten leitenden Schicht (180) bestimmt um mit einem Katodenkollektor verbunden zu sein, und durchgehende Öffnungen aufweisend.

7. Ein Verfahren zum Bilden eines porösen Siliziumträgerwafers für eine Brennstoffzelle, wobei das Verfahren die folgenden Schritte aufweist:
Bilden mehrerer Ausnehmungen (25) auf der Seite von der oberen Oberfläche (1 s) von einem schwach dotieren N-Typ Siliziumwafer (20);
Bilden, auf den erhobenen Arealen von der oberen Oberfläche (1 s) von dem Siliziumwafer einer Schicht (33), die stärker N-Typ dotiert ist, als der Siliziumwafer; und
Durchführen einer Elektrolyse von dem Siliziumwafer, wodurch der Großteil des Wafers bzw. Wafer-Bulk (27, 29) in poröses Silizium (47) umgeformt wird, und die stark dotiere Schicht (33) in poröses Silizium (49) umgeformt wird, wobei die Poren von der porösen Siliziumschicht (49) kleiner sind als die Poren von dem Großteil von dem porösen Siliziumwafer (47).

8. Verfahren nach Anspruch 7, wobei vor der Elektrolyse eine Siliziumschicht (35), die stärker N-Typ dotiert ist, als der Siliziumwafer (20) auch auf der Seite von der unteren bzw. niedrigeren Oberfläche (1 i) von dem Siliziumwafer gebildet wird.

9. Verfahren nach Anspruch 7 oder 8, wobei die Poren von dem Großteil von dem porösen Siliziumwafer (47) Dimensionen größer als 50 nm besitzen und die Poren von den porösen Siliziumschichten (49, 51) Dimensionen besitzen, die in dem Bereich zwischen 2 und 50 nm sind.

10. Ein Verfahren zum Bilden einer Brennstoffzelle auf einem porösen Siliziumwafer (47) gebildet gemäß dem Verfahren nach Anspruch 7 oder 8, wobei das Verfahren ferner die folgenden Schritte aufweist:
Abscheiden einer ersten leitenden Schicht (160), bestimmt um mit einem Anodenkollektor auf den Ausnehmungen (25) verbunden zu sein;
Bilden durchgehender Öffnungen in der ersten leitenden Schicht;
sukzessives Durchführen, auf der ersten leitenden Schicht, von Abscheidungen von einer ersten Katalysatorschicht (170), von einer Elektrolytschicht (171), von einer zweiten Katalysatorschicht (172) und von einer zweiten leitenden Schicht (180) bestimmt um mit einem Anodenkollektor verbunden zu sein; und
Bilden von durchgehenden Öffnungen in der zweiten leitenden Schicht.
